# EUROPEAN PATENT SPECIFICATION

(11) **EP 3 263 267 B1**
(45) Date of publication and mention of the grant of the patent: **26.06.2019**
(21) Application number: 17000146.5
(22) Date of filing: 01.02.2013
(51) Int. Cl.: B23K 9/10, B23K 9/12

(54) **POWER SOURCE AND WIRE FEEDER MATCHING**
STROMQUELLE- UND DRAHTFÖRDERERANPASSUNG
MISE EN CORRESPONDANCE D'UNE SOURCE DE PUISSANCE ET D'UN DISPOSITIF D'ALIMENTATION EN FIL DE SOUDAGE

(30) Priority: 02.02.2012 US 201213364454
(43) Date of publication of application: 03.01.2018
(62) Divisional of application: 13707433.2
(73) Proprietor: Lincoln Global, Inc., Santa Fe Springs, CA 90670 (US)
(72) Inventor: Enyedy, Edward A., Eastlake, OH 44095 (US); Thayer, Robert J., Lakewood, OH 44107 (US)
(74) Representative: Grosse Schumacher Knauer von Hirschhausen

(56) References cited:
- US-A1- 2005 199 605

## Description

The present disclosure is related to identification of components within a welding system, and more particularly, to systems and methods to identify connectivity of power sources and wire feeders via user notification.

### BACKGROUND OF THE INVENTION

Manufacturers frequently locate welding power sources along a perimeter of a work space when fabricating a large weldment, such as a railroad car, farm machinery or a barge (see US-A-2005/0199605). The weldment is placed within the middle of the work space to allow operators to move wire feeders proximate to particular weld locations. One or more cables are employed to connect each wire feeder to a power source within such welding systems. In basic Implementations, an electrode cable is employed to feed welding wire within particular feeder models such as a Lincoln Electric® LN-25 PRO. Particular wire feeder models may also include a cable to transmit power and/or control signals such as a Lincoln Electric® LF-72.

In conventional implementations, the predominate color of cables utilized in welding operations Is black. As a consequence, when a plurality of cables are on a work space floor, it is difficult to discern connectivity of power sources and wire feeders. This problem is exacerbated when a plurality of welding systems are Implemented within a relatively confined work space. As conventional systems provide an inefficient process to identify connectivity between components, deleterious consequences can occur. For example, a wire feeder can be incorrectly coupled to an incompatible power source thereby causing the wire feeder and/or power source to fail. Moreover, if a maintenance issue should arise, efficiently locating and troubleshooting a power source / wire feeder combination can be problematic. In view of these and other deficiencies, systems and methods are needed to effectively identify connectivity of power sources and wire feeders within welding systems.

### SUMMARY OF THE INVENTION

In one aspect, connectivity of a power source and a wire feeder is identified within a weld system. The weld system includes at least one wire feeder, which delivers a welding consumable to a weld location. At least one power source is connected to deliver power to each wire feeder. An Input component is associated with each wire feeder, the Input component is utilized to initiate a data transmission between the wire feeder and the power source connected to the wire feeder. An output component Is associated with each power source. The output component generates an output in response to data transmission initiated by the input component to identify connectivity of the wire feeder and the power source.

In another aspect, a welding system identifies connectivity of components. A power source generates and delivers power to a welding consumable within an electric arc weld operation. At least one wire feeder Is connected to the power source, which delivers a welding consumable to a weld location. An input component, associated with the wire feeder, initiates a data transmission. An output component, associated with the power source, generates a notification based at least in part upon the data transmission initiated by the Input component to identify connectivity of the wire feeder with the power source.

In yet another aspect, a method is utilized to identify connectivity between a power source and a wire feeder within a welding system. An input is received from the wire feeder which is connected to a power source in the welding system. Once it is determined which power source is connected to the wire feeder, an output is sent to identify such connectivity.

### BRIEF DESCRIPTION OF THE DRAWINGS

Reference is made to the accompanying drawings in which particular embodiments and further benefits of the invention are illustrated as described in more detail In the description below, In which:
FIG. 1 is a system that Identifies connectivity of a wire feeder to a power source within a weld operation;
FIG. 2 is a system that utilizes a dedicated control line to identify connectivity of a wire feeder to a power source within a weld operation;
FIG. 3 is a system that utilizes a wireless connection to identify connectivity of a wire feeder to a power source within a weld operation;
FIG. 4 is system that utilizes a computing device to evaluate and identify connectivity of a wire feeder to a power source within a weld operation;
FIG. 5 is a system that utilizes a correlation component and a mobile device to identify and output connectivity of a wire feeder to a power source within a weld operation:
FIG. 6 is a method to output a notification to identify connectivity of a wire feeder to a power source; and
FIG. 7 Is a method to output notification to identify connectivity of a wire feeder to a power source.

### DETAILED DESCRIPTION OF THE INVENTION

Referring now to the figures, several embodiments or implementations of the present invention are hereinafter described in conjunction with the drawings, wherein like reference numerals are used to refer to like elements throughout. The present disclosure is related to a welding system wherein identification of connectivity between individual power sources and wire feeders is facilitated utilizing evaluation and/or output components. Although Illustrated and described hereinafter In the context of various exemplary welding systems, the invention is not limited to the illustrated examples.

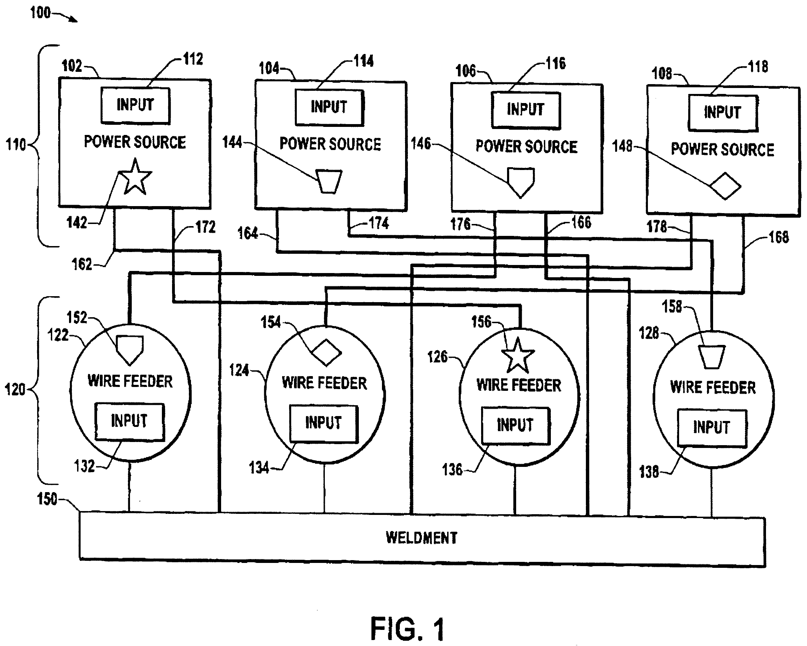

FIG. 1 illustrates welding system 100, which includes a plurality of power sources 110 coupled to a plurality of wire feeders 120. Each wire feeder is utilized with a power source within welding system 100 to place welds on weldment 150. In an example, weldment 150 is a large structure such as a raliroad car, construction equipment, farm machinery, military vehicles, etc. Structures of this scale are essentially fixed In position thereby necessitating movement of wire feeders 120 to place welds at various locations. In view of this arrangement, selection of an appropriate wire feeder, which is connected to an appropriate power source, Is necessary to place a suitable weld. First, proper connectivity insures that both devices are compatible relative to power delivery. Second, selection of an appropriate wire feeder insures that the weld placed on weldment 150 utilizes desired power output, wire feed speed, consumable size, consumable composition, etc., which can be determined by the power source Finally, identification of device connectivity also eases troubleshooting and/or maintenance issues as they arise.

In this example, plurality of power sources 110 include power sources 102, 104, 106 and 108 and plurality of wire feeders 120 include wire feeders 122, 124, 126 and 128. It is to be appreciated that although four power sources and four wire feeders are depicted In this embodiment, substantially any number of power sources and wire feeders can be implemented within the scope of this invention. Furthermore, each power source can be connected to one or more wire feeders and one or more power sources can be connected to each wire feeder as desired. Implementation of the subject embodiments can allow a substantial number of power sources and wire feeders to coexist within a welding system without concern as to the difficulties of maintenance and troubleshooting that arise in conventional systems to accommodate large-scale welding requirements.

Each power source 102-108 can include an input component and an output component, wherein the input component Is utilized to trigger an output in a wire feeder connected thereto. Each wire feeder 122-128 can also include an input component and an output component, wherein the input component triggers an output in a power source to Identify connectivity of components. More generally, a first device (power source) includes an Input component, which is triggered to activate an output component on a second device (wire feeder) connected thereto. In this manner, a user can determine connectivity between devices in a weld operation.

In this embodiment, power source 102 includes Input component 112 and output component 142; power source 104 includes input component 114 and output component 144; power source 106 includes input component 116 and output component 146; and power source 108 includes Input component 118 and output component 148. Each Input component can be comprised of a user-friendly mechanism to initiate and/or trigger an Input signal such as a push button, a touch screen, a switch, a key or a slider. Similarly, each output component can include substantially any component utilized to notify personnel of a particular condition. Exemplary output components include a light, a display, a buzzer, a flag, a flasher, or other suitable notification devices. Each output component 142-148 has a particular shape to depict connectivity with each respective power source 102-108. In this embodiment, output component 142 has a keystone shape, output component 144 has a star shape, output component 146 has a pentagon shape and output component 148 has a diamond shape. Each shape is representative of a particular set of attributes related to compatibility of a power source with a wire feeder, which are connected. Compatibility between a power source and wire feeder can be dependent upon a number of factors including power, current, voltage, frequency, wire feed speed and/or communication protocol.

Similar to power sources 102-108, wire feeders 122-128 each include an Input component and an output component. In this example, wire feeder 122 includes input component 132 and output component 152; wire feeder 124 Includes input component 134 and output component 154; wire feeder 126 includes input component 136 and output component 156 and wire feeder 128 includes input component 138 and output component 158. Each output component is associated with a particular shape which is representative of compatibility and connectivity of the respective wire feeder with a power source, as discussed above. In this example, output component 154 has a pentagon shape, output component 154 has a diamond shape, output component 156 has a star shape and output component 158 has a keystone shape.

As depicted, output components 152-158 have shapes that correspond with output components 142-148 such that there is a one-to-one connectivity between each wire feeder 122-128 and a power source 102-108. In this example, wire feeder 122 is compatible with power source 106; wire feeder 124 is compatible with power source 108; wire feeder 126 is compatible with power source 104 and wire feeder 128 is compatible with power source 102 as each pair has a matching output component shape. Thus, in an example, when input component 112 is triggered, output component 156 Is activated. Similarly when input component 138 is triggered, output component 144 is activated. In another example, when Input component 112 is activated, both output components 158 and 142 are activated. In this manner, a user can Identify connectivity between power source 102 with wire feeder 126 and vice versa. In operation, a user can Identify such connectivity for troubleshooting purposes and/or replacement or maintenance issues that may arise.

Each power source is electrically coupled to both weldment 150 and a respective wire feeder. In this embodiment, power source 102 is connected to weldment 150 via ground cable 162; power source 104 is connected to weldment 150 via ground cable 164; power source 106 is connected to weldment 150 via ground cable 166 and power source 108 is connected to weldment 150 via ground cable 168. Ground cables 162-168 complete a circuit to allow transfer of either direct or alternating current from each power source and consumable on the wire feeder to weldment 150 to create an arc for electric welding. Consumables delivered to a weld location from the wire feeder can range in diameter commensurate with particular weld process requirements and can be made from material that Is compatible with material that is welded, such as steel, cast iron, nickel, aluminum, and copper. Power sources 102-108 can provide constant current or constant voltage for use with a suitable weld operation, such as a shielded metal arc welding (SMAW), a manual metal arc welding (MMAW), a gas metal arc welding (GMAW), a flux-cored arc welding (FCAW), or a submerged arc welding (SAW) process.

Cables 172, 174, 176 and 178 facilitate transfer of power and/or data between a respective power source and wire feeder In connection therewith. Cables 172-178 can each be representative of a plurality of leads that independently transfer data related to control, connectivity, alarms and/or power. In this embodiment, power source 102 is connected to wire feeder 126 via cable 172; power source 104 is connected to wire feeder 128 via cable 174; power source 106 is connected to wire feeder 122 via cable 176 and power source 108 is connected to wire feeder 124 via ground cable 168. In this manner, transmission of signals from input components 112-118, 122-128 is facilitated by cables 172-178 to trigger respective output components 142-148, 152-158.

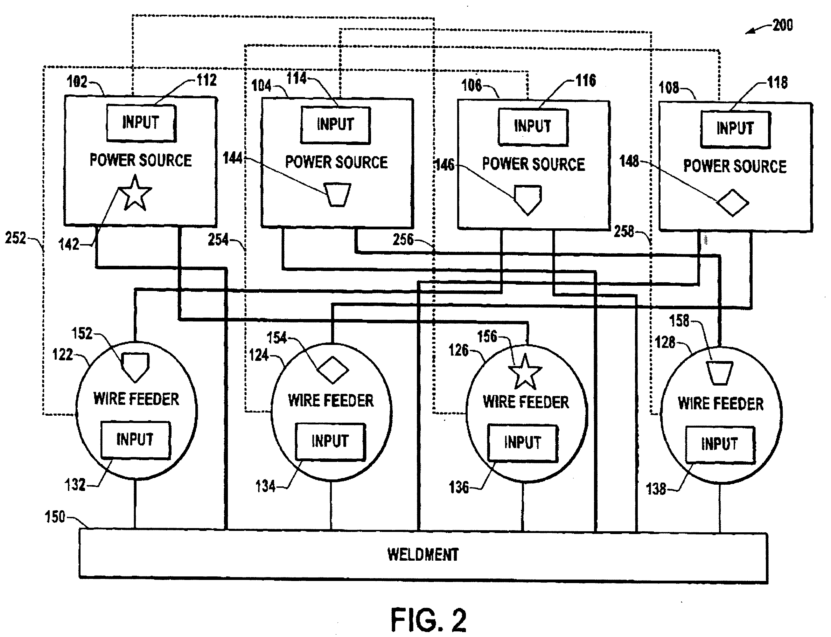

FIG. 2 illustrates an alternate embodiment 200 of a welding system, which includes power sources 102-108 coupled to wire feeders 122-128, as discussed in detail above. In this embodiment, each power source/wire feeder pairing includes a dedicated control cable, which Is utilized to facilitate communication of data between each power source in connection with a respective wire feeder. In this embodiment, wire feeder 122 Is connected to power source 106 via control cable 252; wire feeder 124 is connected to power source 108 via control cable 254; wire feeder 126 is connected to power source 104 via control cable 256 and wire feeder 128 is connected to power source 102 via control cable 258. Each control cable 252-258 facilitates two-way communication of data between each wire feeder and power source. In an example, when input component 116 is activated with regard to power source 106, data Is communicated over control cable 252 to wire feeder 122 to trigger an output through output component 152. Alternatively or In addition, an output is triggered locally via output component 146 on the power source 106. Based on these outputs, an operator can quickly identify connectivity of the power source 106 and the wire feeder 122.

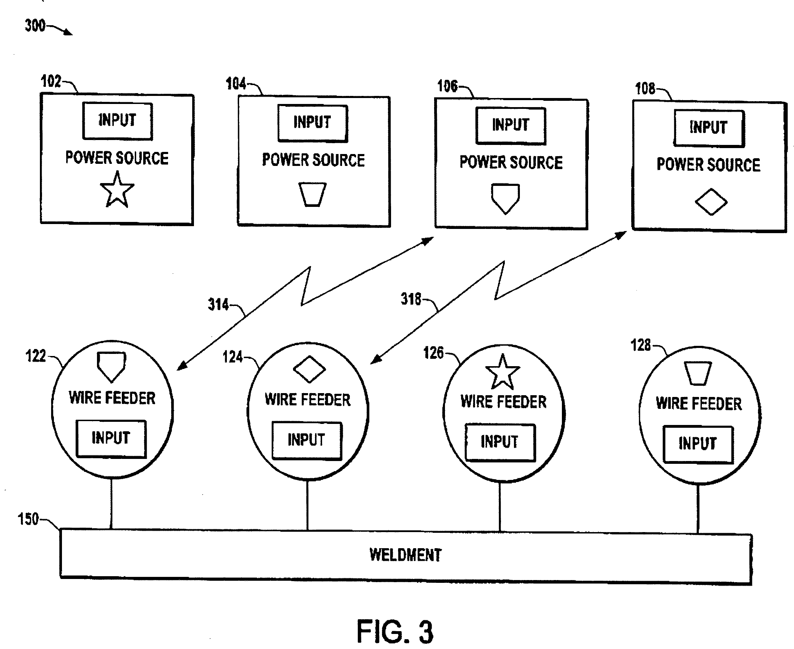

In an embodiment, control cables 252-258 transmit control signals wherein cables 172-178 are employed for the transmission of power. Various communication protocols can be utilized to transmit data over control cables 252-258 such as a physical cable and a serial communication protocol, infrared communication, direct modem communication, remote dial-up networking communication, communication through commercially-available network codes (e.g. using TCP/IP), remote-access services, wireless modem communication, wireless cellular digital packet data (CDPD), wireless Bluetooth™ communication, Firewire™ communication or any other sultable hardwire or wireless communication means. In a particular example, wireless communication is utilized to transmit data between a power source and a wire feeder. FIG. 3 illustrates wireless communication 314 between power source 106 and wire feeder 122 and wireless communication 318 between power source 108 and wire feeder 124. Wireless communication 314, 318 can employ substantially any protocol including Bluetooth™, wireless Ethernet, cellular, or other suitable communication protocol to facilitate transmission of data between respective power source and wire feeder. In this manner, when an Input Is initiated from either a power source or wire feeder, an appropriate output can be displayed at suitable locations within the welding system 300 thereby indicating connectivity of a wire feeder and power source. For this purpose, wireless communication can also include one or more third party components, such as mobile devices, wireless repeaters, wireless routers, and the like to broadcast data within a wireless network.

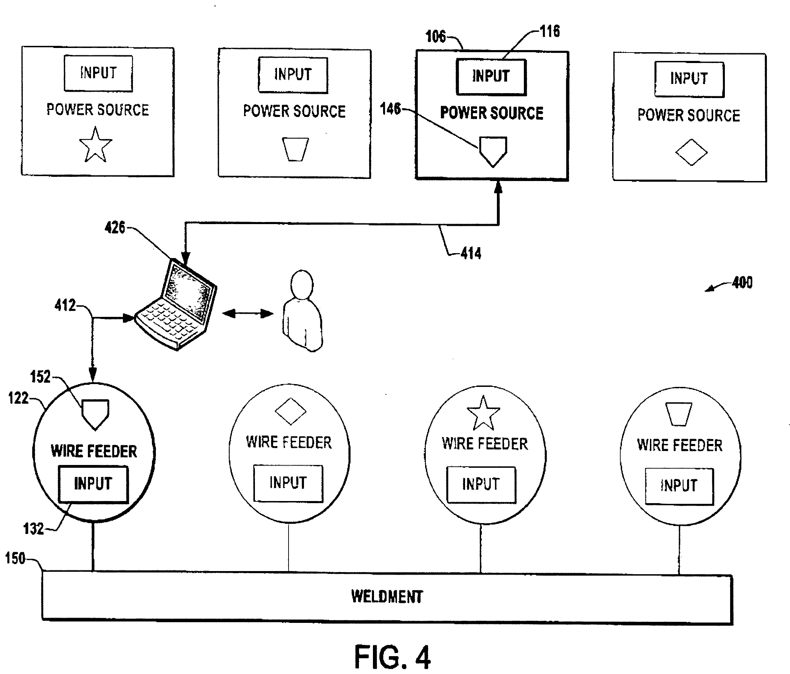

FIG. 4 illustrates another alternate embodiment, wherein computer 426 is coupled to each power source and wire feeder within welding system 400. In this example, the connection between wire feeder 122 and power source 106 Is highlighted. Data 412 is transmitted to provide identification information, input notification, and other data to computer 426 from wire feeder 122. Data 412 may also include output activation information sent from a power source (e.g., power source 106) to trigger output component 152 as suitable. Data 414 is transmitted to provide Identification information, Input notification, and other data to computer 426 from power source 106. In example, identification information within data 412 or data 414 can Include a model number, an RFID code, a serial number, a GPS location, a manufacturer, a power requirement, a voltage requirement, a current requirement, and other identifying characteristics of power source 106 and/or wire feeder 122. In this manner, connectivity of devices can be evaluated.

Moreover, In another embodiment, compatibility of devices can also be discerned. In this example, a wire feeder may not yet be connected to a power source within welding system 400. Computer 426 can receive compatibility information from a plurality of power sources within welding system 400 for evaluation by a user. Once an appropriate power source is identified, wire feeder 122 can be subsequently connected to such power source for operation thereof. For this purpose, location of the power source can also be provided such as within a plant view of a plant floor or other location to allow a user to identify the power source efficiently. Alternatively or in addition, an output component on the power source can be activated at the same time such that the user can quickly identify the correct power source when in a location as presented by computer 426 (e.g. via a GPS application or equivalent). Dissemination of information from computer 426 can occur within substantially any suitable software application such as production monitoring software, supervisory control and data acquisition software, or other enterprise-wide application. This Information can be accessible to anyone coupled to computer 426 such as via a WAN, LAN, internet connection and/or proprietary network.

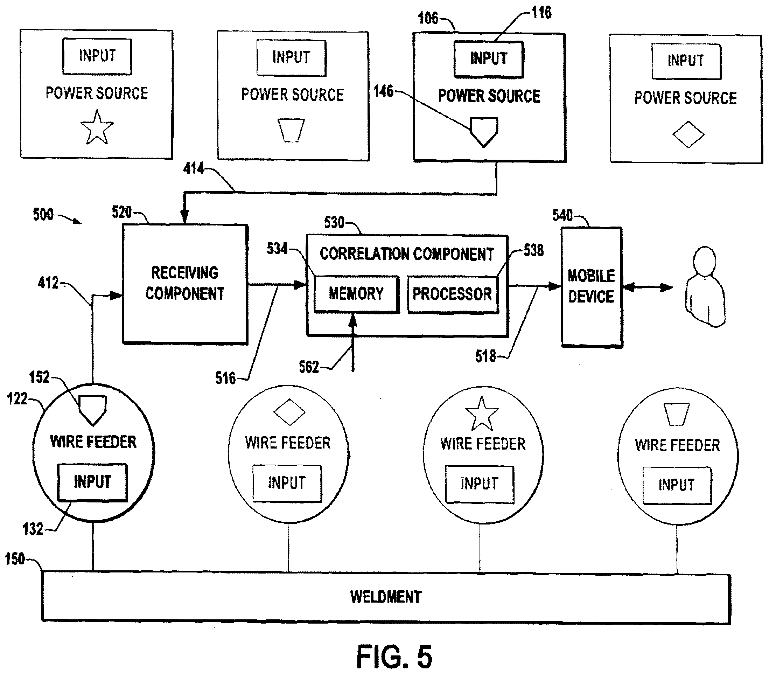

FIG. 5 illustrates yet another embodiment 500 of a welding system. In this embodiment, receiving component 520 receives data 412 from wire feeder 122 and data 414 from power source 106, as discussed above. In an example, receiving component 520 is one or more of a port, a server, a memory store, etc. Correlation component 530 receives this aggregated data 516 from receiving component 520 for further processing, For this purpose, a driver, application programming interface or other suitable software can be emplayed to facilitate transmission of data 516 from receiving component 520 to correlation component 530. In this embodiment, correlation component 530 includes processor 538 to execute code related to data 562 stored within memory 534. In an example, processor 538 compares data 562 to data 516 (e.g., via a lookup table or equivalent) to evaluate whether the wire feeder Is connected to the power source. Once data processing is complete, data 518 is output to mobile device 540 for consumption by one or more users such as a light, a buzzer, an e-mail, a text message and/or a GPS location.

Receiving component 520 can receive data 412, 414 when an appropriate input such as triggering of input component 116 and/or input component. As discussed above with reference to FIG. 4, data 412, 414 can include a model number, one or more power requirements, an RFID code, a serial number, a manufacturer, or other identifying characteristic to facilitate correlation of a power source to a wire feeder. Once the correlation component 530 has determined connectivity between wire feeder 122 and power source 106, this information is sent to mobile device 540, which can be a cellular phone, a tablet, a smart phone, a laptop computer, or other mobile electronic component capable of displaying data associated with connectivity of a power source and a wire feeder within welding system 500.

In a particular embodiment, mobile device 540 is a global positioning system, which contains a map of a work space In which the welding system 500 is distributed. Each power source and wire feeder can output a location Identifier such as a GPS coordinate and/or from an RFID tag embedded therein, which is sent to receiving component 520. This location Information is subsequently displayed within a GPS application on mobile device 540. In this manner, a user can carry mobile device 540 to an appropriate location by following the GPS from a start point to an end point to determine the physical location of any wire feeder or power source within welding system 500. The user may thereby use the correlation component 530 and corresponding mobile device 540 to quickly identify location of power source and wire feeder components (and connectivity thereof) within the welding system to quickly troubleshoot and/or maintain such devices as needed.

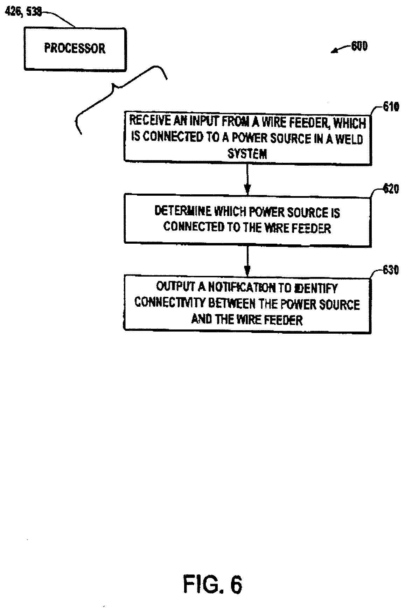

FIG. 6 illustrates methodology 600 that is used to identify connectivity between a power source and wire feeder within a welding system. At reference numeral 610, input is received from a wire feeder which is connected to a power source in a welding system. Such input can be initiated by the use of a physical device such as a push button, switch, slider, etc. to allow a user to trigger transmission of a signal within the welding system. In an example, Information sent as a result of the Input trigger can include Identifying characteristics such as the model number, serial number, manufacturer, power requirements or other metrics to evaluate connectivity and/or compatibility of devices.

At 620, this information Is utilized to determine which power source is connected to the wire feeder from which an input was received. The metrics received in step 610 are evaluated and/or compared to data stored within a memory table or other means to determine connectivity of one device to another. In an example, a power source with a particular model and/or make number has compatibility with a known list of model and/or makes of wire feeders available in the marketplace. Accordingly, when an input is received from the wire feeder, a lookup table can receive identification characteristics such as a model number of the wire feeder which Is then compared to a lookup table to determine which model of power source the wire feeder is compatible for connectivity. This information can be compared to the model number of the power source to determine if the devices are compatible along with determining whether such devices are physically connected.

At 630, once such a determination is made, a notification is output to identify connectivity between the power source and the wire feeder. In an example, a light, a buzzer, a flag, or other notification is output at the power source and/or the wire feeder to notify personnel that the devices are connected. In another example, a notification can be output to a mobile device, such as a cell phone, a tablet, or GPS to provide a user with a physical location of the power source and/or the wire feeder to allow a user to quickly locate such device within a work area. In this manner, when a plurality of wire feeders are utilized with a plurality of power sources within a work area, identification of connectivity between wire feeders and the power sources can be facilitated efficiently.

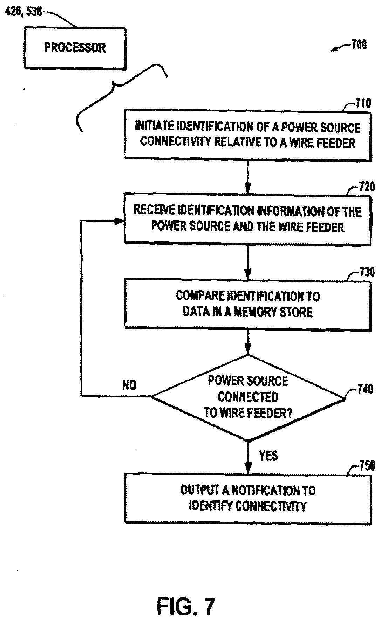

FIG. 7 is a methodology 700 to output notification to identify connectivity between a power source and a wire feeder within a welding system. At 710, a identification of power source connectivity is initiated relative to a wire feeder. Such initiation can come in the form of an Input component such as a push button, switch or keyboard which is then received at 720 and compared to data at memory store 730, Once a comparison is made, at 740, an evaluation is made to determine whether the power source is connected to the wire feeder. If the power source is found to be connected to the wire feeder, a notification is output to identify such connectivity at 750. In this manner, once Identification has been initiated, a notification can be output quickly to allow the user to Identify the physical location of a power source relative to a wire feeder within a welding system. The method continues back to 720 If particular power source Is not connected to a wire feeder to evaluate addition wire feeders within the welding system until an appropriate wire feeder is identified.

In one embodiment, processor 426, 538 ("processor") is a computer operable to execute the architecture set forth in the systems and methods disclosed herein. In order to provide additional context for various aspects of the present invention, the following discussion is intended to provide a brief, general description of a suitable computing environment In which the various aspects of the present invention may be implemented. While the invention has been described above in the general context of computer-executable instructions that may run on one or more computers, those skilled In the art will recognize that the invention also may be implemented In combination with other program modules and/or as a combination of hardware and software. Generally, program modules include routines, programs, components, data structures, etc., that perform particular tasks or implement particular abstract data types.

Moreover, those skilled In the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located In both local and remote memory storage devices.

The processor can utilize an exemplary environment for Implementing various aspects of the invention including a computer, wherein the computer includes a processing unit, a system memory and a system bus. The system bus couples system components including, but not limited to the system memory to the processing unit. The processing unit may be any of various commercially available processors. Dual microprocessors and other multi-processor architectures also can be employed as the processing unit.

The system bus can be any of several types of bus structure including a memory bus or memory controller, a peripheral bus and a local bus using any of a variety of commercially available bus architectures. The system memory can include read only memory (ROM) and random access memory (RAM). A basic input/output system (BIOS), containing the basic routines that help to transfer information between elements within the processor, such as during start-up, is stored in the ROM.

The processor can further include a hard disc drive, a magnetic disc drive, e.g., to read from or write to a removable disc, and an optical disc drive, e.g., for reading a CD-ROM disc or to read from or write to other optical media. The processor can include at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable Instructions, data structures, program modules or other data. Computer storage media includes, but is not limited to, RAM, ROM, EEPROM, flash memory or other memory technology, CD-ROM, digital versatile discs (DVD) or other magnetic storage devices, or any other medium which can be used to store the desired information and which can be accessed by the processor.

Communication media typically embodies computer readable instructions, data structures, program modules or other data In a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

A number of program modules may be stored in the drives and RAM, including an operating system, one or more application programs, other program modules, and program data. The operating system in the processor can be any of a number of commercially available operating systems.

In addition, a user may enter commands and information Into the computer through a keyboard and a painting device, such as a mouse. Other input components may include a microphone, an IR remote control, a track ball, a pen input component, a joystick, a game pad, a digitizing tablet, a satellite dish, a scanner, or the like. These and other input components are often connected to the processing unit through a serial port interface that is coupled to the system bus, but may be connected by other interfaces, such as a parallel port, a game port, a universal serial bus ("USB"), an IR interface, and/or various wireless technologies. A monitor, or other type of display device, may also be connected to the system bus via an interface, such as a video adapter. Visual output may also be accomplished through a remote display network protocol such as Remote Desktop Protocol, VNC. X-Window System, etc. In addition to visual output, a computer typically includes other peripheral output devices, such as speakers, printers, etc.

A display can be employed with the processor to present data that is electronically received from the processing unit. For example, the display can be an LCD, plasma, CRT, etc. monitor that presents data electronically. Alternatively or In addition, the display can present received data in a hard copy format such as a printer, facsimile, plotter etc. The display can present data in any color and can receive data from the processor via any wireless or hard wire protocol and/or standard.

The computer can operate in a networked environment using logical and/or physical connections to one or more remote computers, such as a remote computer(s). The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

When used in a LAN networking environment, the computer is connected to the local network through a network interface or adapter. When used in a WAN networking environment, the computer typically includes a modem, or is connected to a communications server on the LAN, or has other means for establishing communications over the WAN, such as the Internet. In a networked environment, program modules depicted relative to the computer, or portions thereof, may be stored In the remote memory storage device. It will be appreciated that network connections described herein are exemplary and other means of establishing a communications link between the computers may be used.

The above examples are merely illustrative of several possible embodiments of various aspects of the present invention, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (e.g., that is functionally equivalent), even though not structurally equivalent to the disclosed structure which performs the function in the illustrated implementations of the invention. In addition although a particular feature of the invention may have been disclosed with respect to only one of several implementations, such feature may be combined with one or more other features of the other Implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising".

This written description uses examples to disclose the Invention, Including the best mode, and also to enable one of ordinary skill in the art to practice the invention, including making and using any devices or systems and performing any incorporated methods, The patentable scope of the invention is defined by the claims, and may include other examples that occur to those skilled in the art. Such other examples are intended to be within the scope of the claims if they have structural elements that are not different from the literal language of the claims, or If they Include equivalent structural elements with Insubstantial differences from the literal language of the claims.

**REFERENCE NUMBERS**

| | | | |
|---|---|---|---|
| 100 | welding system | 146 | output component |
| 102 | power source | 148 | output component |
| 104 | power source | 150 | weldment |
| 106 | power source | 152 | output component |
| 108 | power source | 154 | output component |
| 110 | power source | 156 | output component |
| 112 | input component | 158 | output component |
| 114 | input component | 162 | ground cable |
| 116 | input component | 164 | ground cable |
| 118 | input component | 166 | ground cable |
| 120 | wire feeder | 168 | ground cable |
| 122 | wire feeder | 172 | cable |
| 124 | wire feeder | 174 | cable |
| 126 | wire feeder | 176 | cable |
| 128 | wire feeder | 178 | cable |
| 132 | input component | 200 | alternate embodiment |
| 134 | input component | 252 | control cable |
| 136 | input component | 254 | control cable |
| 138 | input component | 256 | control cable |
| 142 | output component | 258 | control cable |
| 144 | output component | 314 | wireless communication |
| 318 | wireless communication | 740 | step |
| 400 | welding system | 750 | step |
| 412 | data | | |
| 414 | data | | |
| 426 | computer | | |
| 500 | welding system | | |
| 516 | aggregated data | | |
| 518 | data | | |
| 520 | receiving component | | |
| 530 | correlation component | | |
| 534 | memory | | |
| 538 | processor | | |
| 540 | mobile device | | |
| 562 | data | | |
| 600 | methodology | | |
| 610 | step | | |
| 620 | step | | |
| 630 | step | | |
| 700 | methodology | | |
| 710 | step | | |
| 720 | step | | |
| 730 | step | | |

## Claims

1. A welding system (100) that identifies connectivity of components, comprising:
at least one wire feeder (122, 124, 126, 128), which delivers a welding consumable to a weld location;
at least one power source (102, 104, 106, 108) that is connected to deliver power to each wire feeder; wherein each power source (102, 104, 106, 108) is connected to a respective wire feeder (122, 124, 126, 128) via a respective cable (172, 174, 176, 178) for transfer of both, power and data, the system being **characterized by** :
an input component (132, 134, 136, 138) associated with each wire feeder, the input component is utilized to initiate a data transmission between the wire feeder and the power source connected to the wire feeder; and
an output component (142, 144, 146, 148) associated with each power source wherein the output component generates an output in response to data transmission initiated by the input component to identify connectivity of the wire feeder and the power source.

2. The welding system according to claim 1, wherein the cable (172, 174, 176, 178) can be representative of a plurality of leads that independently transfer data related to control, connectivity, alarms and/or power.

3. The welding system according to claim 1 or 2, further including:
an output component associated with each wire feeder, which sends a signal in response to data transmission initiated by the input component associated with the power source.

4. The welding system according to one of the claims 1 to 3, further including:
an input component associated with each power source, wherein the input component is capable of initiating data transmission to identify connectivity between a wire feeder and a power source.

5. The welding system according to one of the claims 1 to 4, further including:
a processing component that receives data from both the wire feeder and the power source, evaluates at least one identifying characteristic of the wire feeder and the power source, determines if the wire feeder is connected to the power source, and sends an output related to connectivity of the wire feeder and the power source.

6. The welding system according to one of the claims 1 to 5, wherein the connectivity identification is sent to a mobile device (540) that displays a physical location of at least one of the power source and the wire feeder,
wherein the mobile device is preferably one of a tablet, a cellular phone, a global positioning system and a laptop computer.

7. The welding system according to one of the claims 1 to 6, further including:
a correlation component (530) that evaluates at least one identifying characteristic of the wire feeder and the power source by comparing the at least one identifying characteristic to data stored in memory to determine if the power source is connected to the wire feeder
wherein the identifying characteristic is preferably at least one of a serial number, a model number, a manufacturer, an RFID tag, a GPS coordinate, a power requirement, a current requirement, a voltage requirement and a communication protocol.

8. The welding system according to one of the claims 1 to 7, wherein the output component is one of a light, a buzzer, a flasher and a moveable flag.

9. The welding system according to one of the claims 1 to 8, further including:
an RFID tag disposed relative to at least one wire feeder and power source; and/or
further including:
a processing component that receives information from the one or more RFID tags, evaluates connectivity of the wire feeder and the power source associated with respect to each RFID tag and outputs a notification of connectivity between the wire feeder and the power source;
and/ or further including:
a correlation component that evaluates connectivity of the power source to one or more wire feeders; and
a mobile device that receives connectivity information from the correlation component for display to identify physical location of one or more of the power source and the one or more wire feeders,
wherein the mobile device is one of a tablet, a tablet, a cellular phone, a global positioning system and a laptop computer.

10. The welding system according to one of the claims 1 to 9, wherein the input component is at least one of a push button, a slider, a key, a switch and a touch screen.

11. A method that is utilized to identify connectivity between a power source and a wire feeder within a welding system, comprising:
connecting a wire feeder with a power source via cable;
transferring both, data and power, between the power source and the wire feeder via the cable, and being **characterized by**:
receiving an input from the wire feeder which is connected to a power source in the welding system;
determining which power source is connected to the wire feeder;
sending an output that identifies connectivity between the power source and the wire feeder.

12. The method according to claim 11, wherein the output is at least one of a light, a buzzer, a flag, a flasher, an e-mail, a text message and a GPS location; and/or wherein the output is sent to at least one of the power source and the wire feeder.

## Patentansprüche

1. Schweißsystem (100), das die Konnektivität von Komponenten identifiziert, und das Folgendes umfasst:
mindestens eine Drahtzufuhrvorrichtung (122, 124, 126, 128), die ein Schweißverbrauchsmaterial zu einem Schweißort abgibt;
mindestens eine Stromquelle (102, 104, 106, 108), die verbunden ist, um jede Drahtzufuhrvorrichtung mit Strom zu versorgen,
wobei jede Stromquelle (102, 104, 106, 108) mit einer jeweiligen Drahtzufuhrvorrichtung (122, 124, 126, 128) über ein jeweiliges Kabel (172, 174, 176, 178) verbunden ist, um sowohl Strom als auch Daten zu übertragen,
wobei das System **gekennzeichnet ist durch**:
eine Eingabekomponente (132, 134, 136, 138), die jeder Drahtzufuhrvorrichtung zugeordnet ist, wobei die Eingabekomponente dafür verwendet wird, eine Datenübertragung zwischen der Drahtzufuhrvorrichtung und der Stromquelle, die mit der Drahtzufuhrvorrichtung verbunden ist, zu initiieren; und
eine Ausgabekomponente (142, 144, 146, 148), die jeder Stromquelle zugeordnet ist, wobei die Ausgabekomponente ein Ausgangssignal in Reaktion auf Datenübertragungen generiert, die **durch** die Eingabekomponente initiiert wurden, um die Konnektivität der Drahtzufuhrvorrichtung und der Stromquelle zu identifizieren.

2. Schweißsystem nach Anspruch 1, wobei das Kabel (172, 174, 176, 178) für mehrere Anschlussleitungen repräsentativ sein kann, die unabhängig Daten übertragen, die sich auf Steuerung, Konnektivität, Alarme und/oder Strom beziehen.

3. Schweißsystem nach Anspruch 1 oder 2, das des Weiteren Folgendes enthält:
eine Ausgabekomponente, die jeder Drahtzufuhrvorrichtung zugeordnet ist, und die ein Signal in Reaktion auf eine Datenübertragung sendet, die durch die Eingabekomponente initiiert wird, die der Stromquelle zugeordnet ist.

4. Schweißsystem nach einem der Ansprüche 1 bis 3, das des Weiteren Folgendes enthält:
eine Eingabekomponente, die jeder Stromquelle zugeordnet ist, wobei die Eingabekomponente in der Lage ist, eine Datenübertragung zu initiieren, um eine Konnektivität zwischen einer Drahtzufuhrvorrichtung und einer Stromquelle zu identifizieren.

5. Schweißsystem nach einem der Ansprüche 1 bis 4, das des Weiteren Folgendes enthält:
eine Verarbeitungskomponente, die Daten von der Drahtzufuhrvorrichtung und von der Stromquelle empfängt, mindestens eine Identifizierungseigenschaft der Drahtzufuhrvorrichtung und der Stromquelle evaluiert, bestimmt, ob die Drahtzufuhrvorrichtung mit der Stromquelle verbunden ist, und ein Ausgangssignal sendet, das sich auf die Konnektivität der Drahtzufuhrvorrichtung und der Stromquelle bezieht.

6. Schweißsystem nach einem der Ansprüche 1 bis 5, wobei die Konnektivitätsidentifizierung an eine mobile Vorrichtung (540) gesendet wird, die einen physischen Standort von mindestens einer der Stromquelle und der Drahtzufuhrvorrichtung anzeigt,
wobei die mobile Vorrichtung bevorzugt eines von einem Tablet, einem Mobiltelefon, einem Global Positioning System und einem Laptop-Computer ist.

7. Schweißsystem nach einem der Ansprüche 1 bis 6, das des Weiteren Folgendes enthält:
eine Korrelationskomponente (530), die mindestens eine Identifizierungseigenschaft der Drahtzufuhrvorrichtung und der Stromquelle evaluiert, indem sie die mindestens eine Identifizierungseigenschaft mit Daten vergleicht, die in einem Speicher gespeichert sind, um zu bestimmen, ob die Stromquelle mit der Drahtzufuhrvorrichtung verbunden ist,
wobei die Identifizierungseigenschaft bevorzugt mindestens eines von einer Seriennummer, einer Modellnummer, einem Hersteller, einem RFID-Transponder, einer GPS-Koordinate, einem Leistungsbedarf, einem Strombedarf, einem Spannungsbedarf und einem Kommunikationsprotokoll ist.

8. Schweißsystem nach einem der Ansprüche 1 bis 7, wobei die Ausgabekomponente eines von einer Lampe, einem Summer, einem Blitzlicht und einer beweglichen Fahne ist.

9. Schweißsystem nach einem der Ansprüche 1 bis 8, das des Weiteren Folgendes enthält:
einen RFID-Transponder, der relativ zu mindestens einer der Drahtzufuhrvorrichtung und der Stromquelle angeordnet ist; und/oder des Weiteren Folgendes enthält:
eine Verarbeitungskomponente, die Informationen vom dem einen oder den mehreren RFID-Transpondern empfängt, die Konnektivität der Drahtzufuhrvorrichtung und der Stromquelle evaluiert, die mit Bezug auf jeden RFID-Transponder zugeordnet sind, und eine Benachrichtigung bezüglich der Konnektivität zwischen der Drahtzufuhrvorrichtung und der Stromquelle ausgibt;
und/oder des Weiteren Folgendes enthält:
eine Korrelationskomponente, die die Konnektivität der Stromquelle zu einer oder mehreren Drahtzufuhrvorrichtungen evaluiert; und
eine mobile Vorrichtung, die Konnektivitätsinformationen von der Korrelationskomponente empfängt, um sie anzuzeigen, um einen physischen Standort von einem oder mehreren der Stromquelle und der einen oder der mehreren Drahtzufuhrvorrichtungen zu identifizieren,
wobei die mobile Vorrichtung eines von einem Tablet, einem Tablet, einem Mobiltelefon, einem Global Positioning System und einem Laptop-Computer ist.

10. Schweißsystem nach einem der Ansprüche 1 bis 9, wobei die Eingabekomponente mindestens eines von einem Druckknopf, einem Schieberegler, einer Taste, einem Schalter und einem Berührungsbildschirm ist.

11. Verfahren, das dafür verwendet wird, eine Konnektivität zwischen einer Stromquelle und einer Drahtzufuhrvorrichtung innerhalb eines Schweißsystems zu identifizieren, und das Folgendes umfasst:
Verbinden einer Drahtzufuhrvorrichtung mit einer Stromquelle über Kabel; und
**gekennzeichnet ist durch**:
Empfangen einer Eingabe von der Drahtzufuhrvorrichtung, die mit einer Stromquelle in dem Schweißsystem verbunden ist;
Bestimmen, welche Stromquelle mit der Drahtzufuhrvorrichtung verbunden ist;
Senden eines Ausgangssignals, das eine Konnektivität zwischen der Stromquelle und der Drahtzufuhrvorrichtung identifiziert;
Übertragen von Daten und von Strom zwischen der Stromquelle und der Drahtzufuhrvorrichtung über das Kabel.

12. Verfahren nach Anspruch 11, wobei das Ausgangssignal mindestens eines von einer Lampe, einem Summer, einer Fahne, einem Blitzlicht, einer E-Mail, einer Text-Nachricht und einem GPS-Standort ist; und/oder wobei das Ausgangssignal an mindestens eine der Stromquelle und der Drahtzufuhrvorrichtung gesendet wird.

## Revendications

1. Système de soudage (100) qui identifie une connectivité de composants, comprenant :
au moins un dispositif d'alimentation en fil de soudage (122, 124, 126, 128), qui fournit un consommable de soudage à un emplacement de soudage ;
au moins une source de puissance (102, 104, 106, 108) qui est connectée pour fournir une puissance à chaque dispositif d'alimentation en fil de soudage ;
dans lequel chaque source de puissance (102, 104, 106, 108) est connectée à un dispositif d'alimentation en fil de soudage (122, 124, 126, 128) respectif par l'intermédiaire d'un câble respectif (172, 174, 176, 178) pour le transfert à la fois de puissance et de données ;
le système étant **caractérisé par** :
un composant d'entrée (132, 134, 136, 138) associé à chaque dispositif d'alimentation en fil de soudage, le composant d'entrée étant utilisé pour lancer une transmission de données entre le dispositif d'alimentation en fil de soudage et la source de puissance connectée au dispositif d'alimentation de fil de soudage ; et
un composant de sortie (142, 144, 146, 148) associé à chaque source de puissance, dans lequel le composant de sortie génère une sortie en réponse à une transmission de données lancée par le composant d'entrée pour identifier une connectivité du dispositif d'alimentation en fil de soudage et de la source de puissance.

2. Système de soudage selon la revendication 1, dans lequel le câble (172, 174, 176, 178) peut être représentatif d'une pluralité de fils conducteurs qui transfèrent indépendamment des données relatives à une commande, une connectivité, des alarmes et/ou une puissance.

3. Système de soudage selon la revendication 1 ou 2, incluant en outre :
un composant de sortie associé à chaque dispositif d'alimentation en fil de soudage, qui envoie un signal en réponse à une transmission de données lancée par le composant d'entrée associé à la source de puissance.

4. Système de soudage selon l'une des revendications 1 à 3, incluant en outre :
un composant d'entrée associé à chaque source de puissance, dans lequel le composant d'entrée est capable de lancer une transmission de données pour identifier une connectivité entre un dispositif d'alimentation en fil de soudage et une source de puissance.

5. Système de soudage selon l'une des revendications 1 à 4, incluant en outre :
un composant de traitement qui reçoit des données en provenance à la fois du dispositif d'alimentation en fil de soudage et de la source de puissance, évalue au moins une caractéristique d'identification du dispositif d'alimentation en fil de soudage et de la source de puissance, détermine si le dispositif d'alimentation en fil de soudage est connecté à la source de puissance, et envoie une sortie relative à une connectivité du dispositif d'alimentation en fil de soudage et de la source de puissance.

6. Système de soudage selon l'une des revendications 1 à 5, dans lequel l'identification de connectivité est envoyée à un dispositif mobile (540) qui affiche un emplacement physique d'au moins l'un de la source de puissance et du dispositif d'alimentation en fil de soudage,
dans lequel le dispositif mobile est de préférence l'un d'une tablette, d'un téléphone cellulaire, d'un système de positionnement mondial et d'un ordinateur portable.

7. Système de soudage selon l'une des revendications 1 à 6, incluant en outre :
un composant de corrélation (530) qui évalue au moins une caractéristique d'identification du dispositif d'alimentation en fil de soudage et de la source de puissance par la comparaison de l'au moins une caractéristique d'identification à des données mémorisées dans une mémoire pour déterminer si la source de puissance est connectée au dispositif d'alimentation en fil de soudage,
dans lequel la caractéristique d'identification est de préférence au moins l'un d'un numéro de série, d'un numéro de modèle, d'un fabricant, d'une étiquette RFID, d'une coordonnée GPS, d'une exigence de puissance, d'une exigence de courant, d'une exigence de tension et d'un protocole de communication.

8. Système de soudage selon l'une des revendications 1 à 7, dans lequel le composant de sortie est l'un d'un voyant, d'une sonnerie, d'un clignotant et d'un drapeau mobile.

9. Système de soudage selon l'une des revendications 1 à 8, incluant en outre :
une étiquette RFID disposée par rapport à au moins un dispositif d'alimentation en fil de soudage et une source de puissance ; et/ou incluant en outre :
un composant de traitement qui reçoit des informations en provenance des une ou plusieurs étiquettes RFID, évalue une connectivité du dispositif d'alimentation en fil de soudage et de la source de puissance associés à chaque étiquette RFID et délivre une notification de connectivité entre le dispositif d'alimentation en fil de soudage et la source de puissance ;
et/ou incluant en outre :
un composant de corrélation qui évalue une connectivité de la source de puissance à un ou plusieurs dispositifs d'alimentation en fil de soudage ; et
un dispositif mobile qui reçoit des informations de connectivité en provenance du composant de corrélation pour les afficher afin d'identifier un emplacement physique d'un ou plusieurs de la source de puissance et des un ou plusieurs dispositifs d'alimentation en fil de soudage,
dans lequel le dispositif mobile est l'un d'une tablette, d'un téléphone cellulaire, d'un système de positionnement mondial et d'un ordinateur portable.

10. Système de soudage selon l'une des revendications 1 à 9, dans lequel le composant d'entrée est au moins l'un d'un bouton-poussoir, d'un curseur, d'une touche, d'un commutateur et d'un écran tactile.

11. Procédé utilisé pour identifier une connectivité entre une source de puissance et un dispositif d'alimentation en fil de soudage à l'intérieur d'un système de soudage, comprenant :
la connexion d'un dispositif d'alimentation en fil de soudage à une source de puissance par l'intermédiaire d'un câble ;
le transfert à la fois de données et de puissance entre la source de puissance et le dispositif d'alimentation en fil de soudage par l'intermédiaire du câble, et
étant **caractérisé par** :
la réception d'une entrée en provenance du dispositif d'alimentation en fil de soudage qui est connecté à une source de puissance dans le système de soudage ;
la détermination de la source de puissance qui est connectée au dispositif d'alimentation en fil de soudage ;
l'envoi d'une sortie qui identifie une connectivité entre la source de puissance et le dispositif d'alimentation en fil de soudage.

12. Procédé selon la revendication 11, dans lequel la sortie est au moins l'un d'un voyant, d'une sonnerie, d'un drapeau, d'un clignotant, d'un e-mail, d'un message de texte et d'un emplacement GPS ; et/ou dans lequel la sortie est envoyée à au moins l'un de la source de puissance et du dispositif d'alimentation en fil de soudage.
